(19) **Europäisches Patentamt**

**European Patent Office**

**Office européen des brevets**

(11) **EP 1 724 605 A1**

(12) **EUROPÄISCHE PATENTANMELDUNG**

(43) Veröffentlichungstag:
**22.11.2006 Patentblatt 2006/47**

(51) Int Cl.:
*G01S 5/14* (2006.01)

(21) Anmeldenummer: **05104209.1**

(22) Anmeldetag: **18.05.2005**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(71) Anmelder: **Leica Geosystems AG**
**9435 Heerbrugg (CH)**

(72) Erfinder: **Euler, Hans-Jürgen, Dr.**
**9435 Heerbrugg (CH)**

(74) Vertreter: **Harmann, Bernd-Günther**
**Büchel, Kaminski & Partner**
**Patentanwälte Est.**
**Austrasse 79**
**9490 Vaduz (LI)**

(54) **Positionsbestimmungsverfahren für ein satellitengestütztes Positionierungssystem**

(57) Für ein satellitengestütztes Positionierungssystem bei dem eine Sendeeinheit (2) elektromagnetische Strahlung mit wenigstens drei Trägerfrequenzen (3,4,5) aussendet, erfolgt zur Positionsbestimmung ein Empfangen der elektromagnetischen Strahlung durch eine Empfangseinheit (1) und ein Ableiten von wenigstens zwei Pseudostrecken (3a,5a) und wenigstens zwei Trägerphasen (3b,4b) aus der empfangenen Strahlung. Zur Positionsbestimmung wird eine ganzzahlige Phasenmehrdeutigkeit aus der Kombination der zwei Trägerphasen (3b,4b) und der zwei Pseudostrecken (3a,5a) festgelegt, wobei die der ersten Trägerfrequenz (3) und der zweiten Trägerfrequenz (4) zugeordnete erste und zweite Trägerphase (3b,4b) und die der dritten Trägerfrequenz (5) zugeordnete dritte Pseudostrecke (5a) kombiniert werden.

Fig. 3

**Beschreibung**

Die Erfindung betrifft ein Positionsbestimmungsverfahren für ein satellitengestütztes Positionierungssystem nach dem Oberbegriff des Anspruchs 1 und ein Computerprogrammprodukt.

Zur Positionsbestimmung werden gegenwärtig und in Zukunft globale oder satellitenbasierte Positionierungssysteme GNSS (z.B. GPS, GLONASS, GALILEO etc.) für viele Anwendungen genutzt. Hierfür strahlen die Satelliten des Raumsegments elektromagnetische Strahlung mit mehreren Trägerfrequenzen aus. Auf diese Trägerfrequenzen sind zumeist ein- oder mehrere Codes aufmoduliert, die zur Übertragung von Informationen dienen.

Die elektromagnetische Strahlung wird von einem Empfänger erfasst und zur Positionsbestimmung hinsichtlich verschiedener Grössen ausgewertet. So werden anhand der Laufzeiten der Signale von einem Satelliten zum Empfänger sogenannte Pseudostrecken ermittelt, wobei diese durch verschiedene Einflüsse, wie z.B. der Differenz zwischen Satelliten- und Empfängeruhr, von der wahren Distanz abweichen. Diese Pseudostreckenmessungen basieren dabei auf dem einer Trägerfrequenz aufmodulierten Code, der Informationen über den Abstrahlungszeitpunkt des Signals vom Satelliten enthält. Die Satellitensignale werden dabei auf mehreren Trägerfrequenzen übertragen, die bspw. für das GPS-System mit L1 ($154 \cdot 10{,}23 \cdot 10^6$ Hz), L2 ($120 \cdot 10{,}23 \cdot 10^6$ Hz) oder L5 ($115 \cdot 10{,}23 \cdot 10^6$ Hz) bezeichnet werden. Bei GALILEO werden beispielsweise die korrespondierenden Frequenzen mit E1-L1-E2 und E5a (L5) bezeichnet, wobei als drittes Signal E6 mit ($125 \cdot 10{,}23 \cdot 10^6$ Hz) zur Verfügung stehen wird. Andere Frequenzen sind bei Galileo ebenfalls anmessbar.

Eine weitere Möglichkeit zur Entfernungsbestimmung besteht in der Nutzung der Phaseninformationen des Signals. Dabei erfolgt die Messung der Phasenverschiebung, wobei die Nutzung der Trägerphasen eine präzise Positionsbestimmung erlaubt. Der Nachteil der Phasenmessungen liegt jedoch darin, dass deren Distanz nur bis auf ein Vielfaches der verwendeten Wellenlänge bestimmt ist.

Durch die Nutzung von zwei Frequenzen sollten ursprünglich ionosphärische Laufzeitverzögerungen korrigiert werden, wobei jedoch auch durch Linearkombinationen spezielle Kombinationsphasen generiert werden können, wie z.B. ionosphären- oder geometriefreie Linearkombinationen.

Die Kombination von Trägerphasen und Pseudostrecken auf beiden Wellenlängen zur Lösung sogenannter "Widelanes" wurde in den 1980er Jahren entwickelt. Damals war ein erster, ziviler GPS-Empfänger mit Pseudostreckenmessung auf beiden Frequenzen auf dem Markt. Dieser Empfänger verwendete den noch unverschlüsselten P-Code sowohl auf der L1- als auch der L2-Frequenz. Die gemessenen Pseudostrecken waren aufgrund der kürzeren Codewellenlänge von ca. 30 Meter wesentlich genauer als Pseudostreckenmessungen mit Hilfe des C/A-Codes (300m Wellenlänge). Aufgezeichnet wurden L1- und L2-Pseudostrecken als auch L1-und L2-Trägerphasenmessungen.

Das Prinzip der Kombination der Beobachtungen zweier Frequenzen besteht in der Elimination der allen Beobachtungen gemeinsamen Anteile, Kombinationen von Schrägstrecke zum Satelliten, Troposphäre und Ähnlichem, und des dispersiven, ionosphärischen Anteils, der ein unterschiedliches Vorzeichen für Pseudostrecken und Phasenmessungen aufweist. Während allgemein nur auf die vorteilhafte Widelane gelöst wird, kann das Verfahren für beliebige Linearkombinationen aufgestellt werden. Hierbei ist anzumerken, dass die Lösung der Widelanes zwischen einer Station und einem Satelliten nur theoretisch möglich ist. Zwischen den Frequenzen unterschiedliche Uhrenfehler im Satelliten und dem Empfänger verhindern diese Möglichkeit. Aus diesem Grund kann eine Lösung nur nach der Bildung von Doppeldifferenzen oder der Einführung der jeweiligen Uhrendifferenzen erfolgen.

Dieser Ansatz der Verwendung von zwei Frequenzen und den Messungen der zugeordneten Trägerphasen und Pseudostrecken verbindet die mit der Trägerphase grundsätzlich mögliche Genauigkeit mit der durch die Pseudostreckenmessung möglichen Festlegung der Phasenmehrdeutigkeit. Eine direkte Auflösung erlaubt der sogenannte Melbourne-Wübbena-Ansatz, bei dem Phasen- und Pseudostreckenmessungen in einem zu lösenden Gleichungssystem kombiniert werden. Hierbei werden die Trägerphasenmessungen als Phasenstrecken angegeben, d.h. in metrischen Einheiten anstelle von sonst üblicherweise verwendeten Zyklen - durch die Multiplikation mit der Wellenlänge der jeweiligen Trägerphase erhält man die sogenannte Phasenstrecke.

Der Ansatz beruht auf der Modellierung der Phasenstrecken für die beiden Trägerfrequenzen gemäss

$$\phi_1 = \rho - \frac{I}{f_1^2} + N_1 \lambda_1 + \varepsilon_{\phi_1} \qquad (1)$$

$$\phi_2 = \rho - \frac{I}{f_2^2} + N_2\lambda_2 + \varepsilon_{\phi_2} \qquad (2)$$

und der Pseudostrecken gemäss

$$R_1 = \rho + \frac{I}{f_1^2} + \varepsilon_{R_1} \qquad (3)$$

$$R_2 = \rho + \frac{I}{f_2^2} + \varepsilon_{R_2} \qquad (4)$$

wobei mit $i=1,2$ $\phi_i$ eine der i-ten Trägerfrequenz zugeordnete Phasenstrecke, $R_i$ die i-te Pseudostrecke, $\rho$ die geometrische Strecke zwischen Satellit und Empfangseinheit, insbesondere einschliesslich Uhrenfehlern und nicht-dispersiven Fehleranteilen, $\frac{I}{f_i^2}$ einen Ionosphäreneinfluss für die i-te Trägerfrequenz, $N_i$ eine Phasenmehrdeutigkeit für die der i-ten Trägerfrequenz zugeordnete Wellenlänge $\lambda_i$, $\varepsilon_{\phi_i}$ einen Rauschanteil für die der i-ten Trägerfrequenz zugeordnete Phasenstrecke und $\varepsilon_{R_i}$ einen Rauschanteil für die i-te Pseudostrecke bezeichnen.

Die direkte, numerische Kombination dieser vier Beobachtungen ermöglicht die Lösung der Mehrdeutigkeiten der Differenz beider Trägerphasenmessungen. In der Regel müssen die Ergebnisse über eine gewisse Zeit akkumuliert werden um eine eindeutige Lösung zu ermöglichen, d.h. es erfolgt eine Mittelwertbildung der berechneten Widelanes. Ursache hierfür sind die meist zu ungenauen Pseudostreckenmessungen. Eine andere Möglichkeit besteht in der Verwendung eines Kalmanfilters in dem die Beobachtungen auf einfachste Weise modelliert werden. Das Melbourne-Wübbena-Modell und die Verwendung von Filtern wird beispielsweise in Euler, Hans-Jürgen und Goad, Clyde C., "*On optimal filtering of GPS dual frequency observations without using orbit information*", Bulletin Géodésique (1991) 65: 130-143 erläutert.

Bei dem Verfahren handelt es sich um eine differentielle Positionsbestimmung, da die ganzzahligen Phasenmehrdeutigkeiten nur in der Doppeldifferenz festlegbar sind. Dies ist wegen noch vorhandener Fehler, z.B. Satelliten- und Empfängeruhrenfehler, notwendig. Durch die Kombination von 2 Phasenmessungen, die in den Gleichungen (1) und (2) schon als Phasenstrecken ausgedrückt werden, und den 2 Pseudostreckenmessungen in Gleichung (3) und (4) mit anschliessender Doppeldifferentierung, können die Phasenmehrdeutigen für Widelanes ohne Einbeziehung der Geometrie, d.h. Positionsberechnung der Satelliten und des Empfängers, bestimmt und festgelegt werden. Hier liegt der Vorteil des Widelanings auf diese Art und Weise.

Durch die Nutzung der beiden Frequenzen zur gemeinsamen Ableitung aller Phasen- und Pseudostrecken bleibt die erzielbare Genauigkeit grundsätzlich auf die beiden Frequenzen beschränkt. Eine unabhängige Verbesserung oder Optimierung von Phasen- oder Pseudostreckenmessungen kann nicht geleistet werden. Zudem werden stets Trägerfrequenzen benötigt, die sowohl codiert sind als auch hinsichtlich ihrer Phasen mit der benötigten Genauigkeit auswertbar sind.

Die Aufgabe der vorliegenden Erfindung besteht in Bereitstellung eines Positionsbestimmungsverfahrens für ein satellitenbasiertes Positionierungssystem, das eine gegenüber dem Stand der Technik erhöhte Genauigkeit bzw. kürzere Initialisierungszeiten für die Bestimmung von Phasenmehrdeutigkeiten erlaubt.

Eine weitere Aufgabe besteht in der Bereitstellung eines Verfahrens mit hoher Flexibilität und einer verbesserten Nutzung von Satellitensignalen, insbesondere auch von Raumsegmenten verschiedener Betreiber.

Diese Aufgaben werden erfindungsgemäss durch die Verfahren oder Gegenstände des Anspruchs 1 sowie durch die kennzeichnenden Merkmale der Unteransprüche gelöst bzw. die Lösungen fortgebildet.

Die Erfindung betrifft ein Positionsbestimmungsverfahren für ein satellitengestütztes Positionierungssystem nach dem Anspruch 1 und ein entsprechendes Computerprogrammprodukt nach Anspruch 10.

Das erfindungsgemässe Konzept basiert auf der Kombination von zwei Frequenzen der Trägerphasen mit wenigstens einer weiteren Frequenz für die gemessenen Pseudostrecken. Dabei können eine oder alle beide für die Bestimmung der Pseudostrecke von den für die Trägerphasenmessung verwendeten abweichen.

Dieser Ansatz erlaubt beispielsweise die Realisierung von verschiedenen Vorteilen:

- Es können Trägerphasenmessungen für Frequenzen durchgeführt werden, auf denen keine Pseudostrecken gemessen werden oder nicht messbar sind, z.B. da keine Codierung vorliegt oder diese nicht auswertbar ist.

- Es kann eine Kombination mit Pseudostreckenmessungen erfolgen, deren inhärente Messgenauigkeit systembedingt signifikant höher ist.

- Es ist eine Kombination mit Pseudostrecken möglich, deren Genauigkeit durch Glätten mit Hilfe von Trägerphasenmessungen höher ist als bei anderen Frequenzen. Dies kann sich beispielsweise im Hinblick auf die Beseitigung von Zyklusfehlern positiv auswirken. Somit können Pseudostrecken mit Trägerphasenmessungen geglättet werden, die nicht den zur Lösung des Gleichungssystems verwendeten Trägerphasen entsprechen.

Mit der Modernisierung von GPS wird in Zukunft eine dritte Wellenlänge mit Trägerphase und eventuell auch Codierung zur Verfügung stehen. Das Melbourne-Wübbena-Verfahren kann dann erfindungsgemäss in Kombinationen der ersten mit der dritten oder zweiten mit der dritten Trägerphase und den jeweiligen Pseudostreckenmessungen angewandt werden. Das neue Europäische Satellitensystem Galileo wird ebenfalls Signale auf mehr als 2 Frequenzen aussenden. Ähnliche Planungen existieren ebenfalls für das russische GLONASS.

Um die Genauigkeit der Pseudostreckenmessungen zu verbessern kann zudem eine Glättung der Pseudostrecke durchgeführt werden. Hierzu wird eine Differenz von Pseudostrecke und Phasenstrecke herangezogen:

$$R_i - \phi_i = 2\frac{I}{f_i^2} - \lambda_i N_i - \varepsilon_{\phi_i} + \varepsilon_{R_i} \qquad (5)$$

$$\phi_i = \rho - \frac{I}{f_i^2} + \lambda_i N_i + \varepsilon_{\phi_i}$$

wobei

$$R_i = \rho + \frac{I}{f_i^2} + \varepsilon_{R_i}$$

Solange die Trägerphase und damit das metrische Pendant, die Phasenstrecke, nicht durch Zyklusfehler gestört sind, kann durch eine einfache Mittelbildung das Messrauschen der Differenz und damit der Pseudostrecken reduziert werden. Jedoch bilden die zeitlichen Änderungen der Ionosphäre ein Hindernis in bezug auf die Länge des Zeitintervalls der Mittelung. Üblicherweise wird versucht, nicht länger als eine Minute zu filtern.

Um dennoch eine divergenzfreie Glättung von Pseudostrecken zu erzielen, können erfindungsgemäss Linearkombinationen von Trägerphasenmessungen gebildet werden, deren Änderungen exakt den Änderungen von Pseudostrecken entsprechen, was eine Umkehrung des Vorzeichens des ionosphärischen Einflusses bedingt. Einfache Differenzen zwischen den Trägerphasen und der Pseudostrecke enthalten dann im wesentlichen nur den Rauschanteil der Pseudostrecken. Dieser Rauschanteil kann über die Zeit gemittelt werden und durch Rücksubstitution wird eine geglättete Pseudostrecke erhalten.

Für die Glättung einer Pseudostrecke kann bei Messungen von drei oder mehr Trägerfrequenzen die modifizierte Phasenstrecke mit gedrehtem Vorzeichen des ionosphärischen Anteils aus Trägerphasen gebildet werden, deren Frequenzen nicht der zu glättenden Pseudostrecke entspricht. Dies bietet einen Vorteil wenn die Trägerphase mit derselben Frequenz wie die zu glättende Pseudostrecke einen Zyklusfehler aufweist. In einen solchen Fall müsste ansonsten zwangsläufig die Mittelung neu initialisiert werden.

Die Linearkombination kann gemäss

$$\phi_1{}^* = F(\phi_1, \phi_2) = \rho + \frac{I}{f_1^2} + G(N_1, N_2) + \varepsilon_{\phi_1}{}^* \qquad (6)$$

beschrieben werden, wobei $\phi_1$ und $\phi_2$ jeweils eine einer ersten bzw. zweiten Trägerfrequenz zugeordnete Phasenstrecke, $F(\phi_1,\phi_2)$ eine Linearkombination der Phasenstrecken, $G(N_1,N_2)$ eine Linearkombination der Phasenmehrdeutigkeiten und $\varepsilon_{\phi_i}{}^*$ einen Rauschanteil für die Linearkombination bezeichnen.

Die Differenzbildung aus Linearkombination und wenigstens einer der dritten oder weiteren Trägerfrequenz zugeordneten Pseudostrecke erfolgt gemäss

$$R_k - \phi_1{}^* = -G(N_1, N_2) - \varepsilon_{\phi_1}{}^* + \varepsilon_{R_k} \qquad (7)$$

mit $R_k$ als Pseudostrecke der dritten oder weiteren Trägerfrequenz und $\varepsilon_{R_k}$ als zugeordneter Rauschanteil.

Im Gegensatz zum vorherbeschriebenen Verfahren kann das Zeitintervall für die Glättung prinzipiell beliebig lange gewählt werden, da keine zeitabhängigen Grössen auf der rechten Seite stehen.

Geeignete Faktoren $\gamma^*$ und $\delta^*$ zur Erzeugung einer Phasenkombinationslösung - für die Phasenmessungen einer ersten und einer zweiten Trägerfrequenz $f_1$ und $f_2$ - mit umgedrehten Vorzeichen für eine Pseudostrecke, welche einer dritten Trägerfrequenz $f_3$ zugeordnet ist, können wie folgt formuliert werden

$$\gamma^* = \frac{f_2^2}{f_2^2 - f_1^2}$$

$$\delta^* = -\frac{f_2^2}{f_2^2 - f_1^2} \qquad (8)$$

Es folgt mit

$$\phi_{Iono1} = \phi_1 \gamma^* - \phi_2 \delta^* \qquad (9)$$

und

$$\phi_{Iono3} = \frac{f_1^2}{f_3^2} \phi_{Iono1}$$

$$\phi_{Iono3} = -\frac{I}{f_3^2} + \lambda_1 N_1 \frac{f_2^2}{f_2^2 - f_1^2} \frac{f_1^2}{f_3^2} - \lambda_2 N_2 \frac{f_2^2}{f_2^2 - f_1^2} \frac{f_1^2}{f_3^2} \qquad (10)$$

so dass sich die modifizierte Phasenstrecke für die dritte Trägerfrequenz als Linearkombination der Phasenstrecken gemäss

$$\phi_3^* = F(\phi_1, \phi_2) = \phi_1 - \phi_{Iono1} - \phi_{Iono3} \tag{11}$$

ergibt, wobei diese wie folgt ausformuliert werden kann:

$$\phi_3^* = \rho - \frac{I}{f_1^2} + \lambda_1 N_1 - \left( -\frac{I}{f_1^2} + \lambda_1 N_1 \frac{f_2^2}{f_2^2 - f_1^2} - \lambda_2 N_2 \frac{f_2^2}{f_2^2 - f_1^2} \right)$$
$$- \left( -\frac{I}{f_3^2} + \lambda_1 N_1 \frac{f_2^2}{f_2^2 - f_1^2} \frac{f_1^2}{f_3^2} - \lambda_2 N_2 \frac{f_2^2}{f_2^2 - f_1^2} \frac{f_1^2}{f_3^2} \right) \tag{(12)}$$

und

$$\phi_3^* = \rho + \frac{I}{f_3^2} + \lambda_1 N_1 - \left( \lambda_1 N_1 \frac{f_2^2}{f_2^2 - f_1^2} - \lambda_2 N_2 \frac{f_2^2}{f_2^2 - f_1^2} \right)$$
$$- \left( \lambda_1 N_1 \frac{f_2^2}{f_2^2 - f_1^2} \frac{f_1^2}{f_3^2} - \lambda_2 N_2 \frac{f_2^2}{f_2^2 - f_1^2} \frac{f_1^2}{f_3^2} \right) \tag{13}$$

Damit folgt aufgrund von Gleichung (7) als Linearkombination der Phasenmehrdeutigkeiten

$$G(N_1, N_2) = +\lambda_1 N_1 - \lambda_1 N_1 \frac{f_2^2}{f_2^2 - f_1^2} + \lambda_2 N_2 \frac{f_2^2}{f_2^2 - f_1^2}$$
$$- \lambda_1 N_1 \frac{f_2^2}{f_2^2 - f_1^2} \frac{f_1^2}{f_3^2} + \lambda_2 N_2 \frac{f_2^2}{f_2^2 - f_1^2} \frac{f_1^2}{f_3^2}$$
$$G(N_1, N_2) = +\lambda_1 N_1 - \lambda_1 N_1 \frac{f_2^2}{f_2^2 - f_1^2} - \lambda_1 N_1 \frac{f_2^2}{f_2^2 - f_1^2} \frac{f_1^2}{f_3^2} \tag{14}$$
$$+ \lambda_2 N_2 \frac{f_2^2}{f_2^2 - f_1^2} + \lambda_2 N_2 \frac{f_2^2}{f_2^2 - f_1^2} \frac{f_1^2}{f_3^2}$$
$$G(N_1, N_2) = \lambda_1 N_1 \left( 1 - \frac{f_2^2}{f_2^2 - f_1^2} - \frac{f_2^2}{f_2^2 - f_1^2} \frac{f_1^2}{f_3^2} \right)$$
$$+ \lambda_2 N_2 \left( \frac{f_2^2}{f_2^2 - f_1^2} + \frac{f_2^2}{f_2^2 - f_1^2} \frac{f_1^2}{f_3^2} \right)$$

Dieser Ausdruck weist die beabsichtigte prinzipielle Unabhängigkeit von zeitlichen Veränderungen auf.

In einem beispielhaft konkretisierten Anwendungsfall können der Trägerfrequenzen $f_1$ und $f_2$ die GPS-Frequenzen L1 und L2 sowie der dritten Trägerfrequenz $f_3$ die GPS-Frequenz L5 entsprechen.

Das erfindungsgemässe Positionsbestimmungsverfahren wird nachfolgend anhand von in der Zeichnung schematisch dargestellten Ausführungsbeispielen rein beispielhaft näher beschrieben. Im einzelnen zeigen

Fig.1    eine erläuternde Darstellung der Positionsbestimmung mit einem globalen Positionierungssystem nach dem Stand der Technik;

Fig.2    eine schematische Darstellung der Positionsbestimmung mit direkter Auflösung der Phasenmehrdeutigkeit durch Nutzung von zwei Trägerfrequenzen nach dem Stand der Technik;

Fig.3  eine schematische Darstellung eines ersten Ausführungsbeispiels des erfindungsgemässen Verfahrens mit drei Trägerfrequenzen und

Fig.4  eine schematische Darstellung eines zweiten Ausführungsbeispiels des erfindungsgemässen Verfahrens mit vier Trägerfrequenzen.

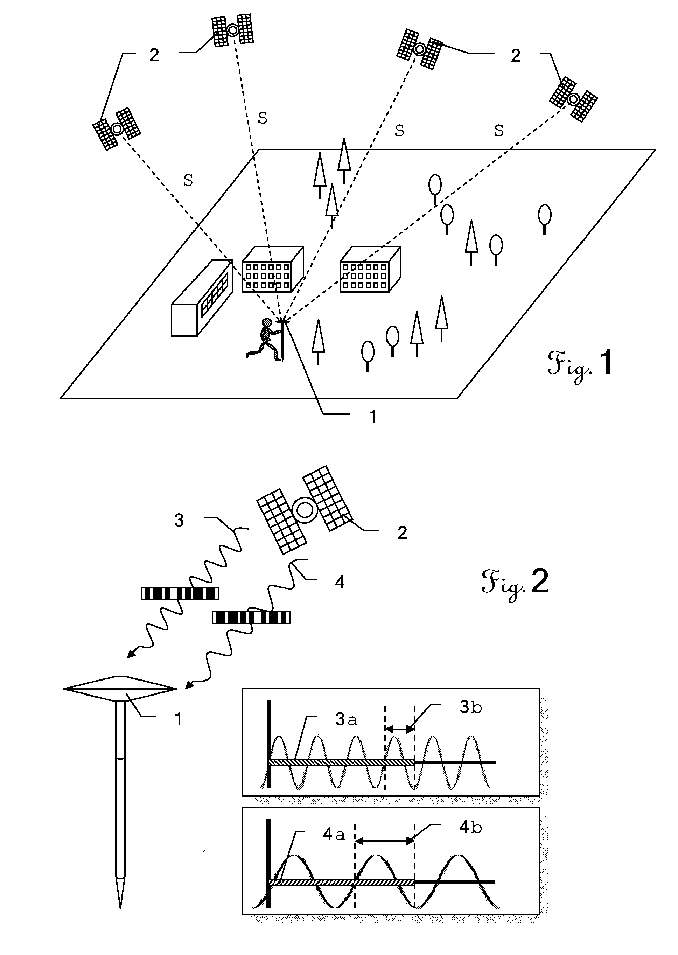

In Fig.1 wird die Positionsbestimmung mit einem globalen Positionierungssystem nach dem Stand der Technik erläutert. Eine Empfangseinheit 1 für ein globales, satellitenbasiertes Positionierungssystem empfängt die von Satelliten 2 als Sendeeinheit emittierte elektromagnetische Strahlung S und wertet die Strahlung S hinsichtlich ihrer inhärenten, wie z.B. Trägerphasen, und aufmodulierten Eigenschaften, wie z.B. eines Codes, aus. In der Regel werden dabei für eine hinreichend genaue Positionsbestimmung Sichtstrecken bzw. empfangene Signale von wenigstens vier Satelliten 2 benötigt.

Zur Korrektur von verschiedenen Fehlern oder Einflüssen, wie z.B. ionosphärischer Verzögerungen oder Uhrendifferenzen zwischen Satelliten 2 und Empfangseinheit 1, werden zumeist mindestens 2 Trägerfrequenzen hinsichtlich zweier Grössen ausgewertet. Fig.2 zeigt schematisch eine solche Nutzung zweier Trägerfrequenzen mit direkter Auflösung der Phasenmehrdeutigkeit nach dem Stand der Technik. Die Empfangseinheit 1 analysiert hierbei die Signale einer ersten Trägerfrequenz 3 und einer zweiten Trägerfrequenz 4, bzw. deren zugeordneter Wellenlängen. Anhand des aufgeprägten Codes können den jeweiligen Trägerfrequenzen zugeordnete Pseudostrecken 3a und 4a abgeleitet werden, die über eine Laufzeitbestimmung die Distanz von Empfangseinheit 1 zum Satelliten 2 repräsentieren. Allerdings ist diese Distanz noch durch Uhrenfehler verfälscht. Parallel werden für die beiden Trägerfrequenzen die Phasenverschiebungen bzw. Trägerphasen 3b und 4b gegenüber einem internen Referenzsignal ermittelt. Diese Trägerphasen 3b und 4b repräsentieren eine Distanz und sind zwar präzise, jedoch noch mit einer aufzulösenden Phasenmehrdeutigkeit verknüpft, wobei durch doppelte Differenzbildung auf eine tatsächliche Bestimmung der Distanz zur Auflösung dieser Phasenmehrdeutigkeit verzichtet werden kann. Aus der Kombination von Pseudostrecken 3a und 4a und der Trägerphasen 3b und 4b zugeordneten Phasenstrecken als metrisches Äquivalent, bzw. deren Differenzen, kann eine direkte Lösung der Mehrdeutigkeit und eine Eliminierung von Fehlern erfolgen. Im Stand der Technik werden für Phasenmessung und Bestimmung der Pseudostrecken jeweils die gleichen zwei Trägerfrequenzen verwendet, beispielsweise bei GPS L1 und L2.

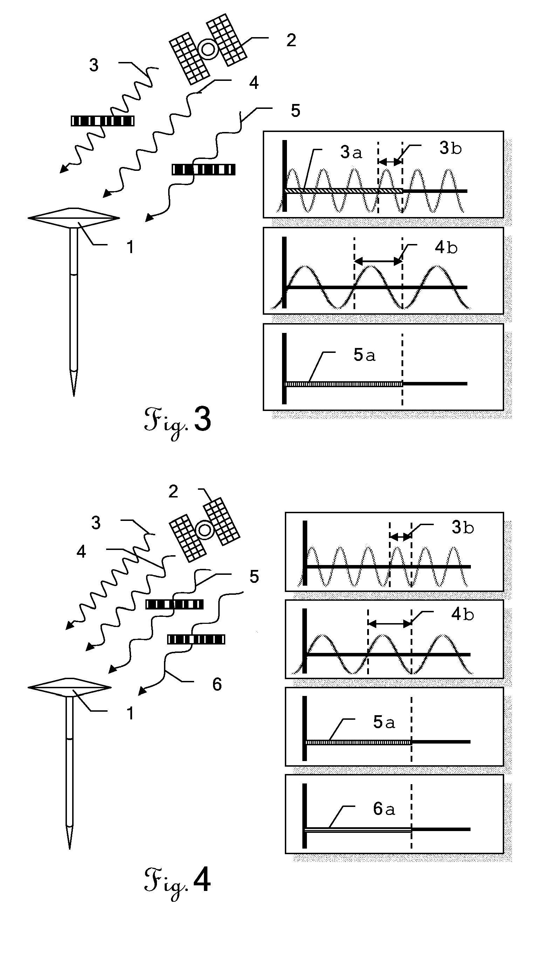

Fig.3 zeigt eine schematische Darstellung eines ersten Ausführungsbeispiels des erfindungsgemässen Verfahrens mit einer dritten Trägerfrequenz 5. In diesem Beispiel tragen nun die erste Trägerfrequenz 3 und die dritte Trägerfrequenz 5 eine Codierung, wohingegen die zweite Trägerfrequenz 4 ohne Code ausgesendet wird oder der Code nicht verwendet werden kann oder soll. Erfindungsgemäss werden nun alle drei Trägerfrequenzen hinsichtlich ihrer beinhalteten Information genutzt. Hinsichtlich der uncodierten oder uncodiert gemessenen zweiten Trägerfrequenz 4 wird die Trägerphase 4b gemessen. Die dritte Trägerfrequenz 5 wird hingegen hinsichtlich der Pseudostrecke 5a analysiert, während für die erste Trägerfrequenz 3 sowohl Pseudostrecke 3a als auch Trägerphase 3b abgeleitet bzw. gemessen werden. Durch die Nutzung einer weiteren Trägerfrequenz ist es möglich, auch hinsichtlich ihrer physikalischen Bedingungen, z.B. der frequenzabhängigen ionosphärischen Verzögerung, besser geeignete Trägerfrequenzen zu nutzen, selbst wenn diese nicht beide Informationen, d.h. Phase und Pseudostrecke, tragen. Somit ist die Flexibilität bei der Wahl von nutzbaren Trägerfrequenzen durch das erfindungsgemässe Verfahren gegenüber dem Stand der Technik erhöht. Die nun grundsätzlich mögliche Trennbarkeit von Phase und Pseudostrecke erlaubt eine Verbesserung der Positionsbestimmung. Durch eine Optimierung der physikalischen oder algorithmischen Bedingungen kann eine erhöhte Genauigkeit, z.B. durch Wahl einer präziseren oder geglätteten Pseudostrecke, erzielt werden.

Eine vollständige Separation von Phasen und Pseudostrecken in Form eines zweiten Ausführungsbeispiels des erfindungsgemässen Verfahrens mit vier Trägerfrequenzen zeigt Fig.4. Der Satellit 2 emittiert in diesem Beispiel Strahlung mit vier unterschiedlichen Trägerfrequenzen. Hierbei werden die erste und zweite Trägerfrequenz 3 und 4 uncodiert ausgesendet oder uncodiert angemessen und die dritte und vierte Trägerfrequenz 5 und 6 mit einem Code ausgesendet. Die Messung der Trägerphase 3b und 4b erfolgt für die kurzwellige und präzise erste und zweite Trägerfrequenz 3 und 4, wohingegen eine Messung der Pseudostrecken 5a und 6a für die im Vergleich niederfrequente dritte und vierte Trägerfrequenz 5 und 6 durchgeführt wird. Durch das erfindungsgemässe Verfahren können somit die Messungen in den jeweils vorteilhaften Frequenzbereichen durchgeführt werden. Unabhängig von dieser Ausgestaltung können jedoch auch in beliebiger Weise auf die unterschiedlichen Trägerfrequenzen verteilte Codierungen ausgewertet werden.

Die in den Figuren dargestellte Trägerphase entspricht physikalisch nicht exakt der tatsächlich durchgeführten Messung bezüglich einer Referenzphase. Aus Anschaulichkeitsgründen wurden die Trägerphasen und der Mehrdeutigkeitsanteil direkt mit der Pseudostrecke in Bezug gesetzt. Zudem ist trotz der gewählten systemspezifischen Beispiele das Verfahren grundsätzlich auch für beliebige gattungsgemässe satellitenbasierte Positionierungssysteme, wie z.B.

GPS, Galileo oder GLONASS, erfindungsgemäss verwendbar. Insbesondere sind die Bezeichnungen "erste" Trägerfrequenz, "zweite" Trägerfrequenz etc. nicht notwendigerweise identisch mit Bezeichnungen wie L1, L2 etc. Beispielsweise kann die "erste" Trägerfrequenz auch L5, die "zweite" L1 und die "dritte" L2 repräsentieren. Auch sind die in den Figuren rein exemplarisch gewählten Frequenzab- bzw. -reihenfolgen für die Trägerfrequenzen nicht als einschränkend zu betrachten.

**Patentansprüche**

1. Positionsbestimmungsverfahren für ein satellitengestütztes Positionierungssystem mit wenigstens einer Sendeeinheit (2), wobei die Sendeeinheit (2) elektromagnetische Strahlung (S) mit wenigstens

   - einer ersten Trägerfrequenz (3),
   - einer zweiten Trägerfrequenz (4) und
   - einer dritten Trägerfrequenz (5) aussendet,
   o einem Empfangen der elektromagnetischen Strahlung (S) durch eine Empfangseinheit (1),
   o einem Ableiten von

      - wenigstens zwei Pseudostrecken (3a,4a,5a,6a) und
      - wenigstens zwei Trägerphasen (3b,4b,5b,6b)

   aus der empfangenen Strahlung (S), wobei zur Positionsbestimmung eine ganzzahlige Phasenmehrdeutigkeit aus der Kombination der zwei Trägerphasen (3b,4b,5b,6b) und der zwei Pseudostrecken (3a,4a,5a,6a) festgelegt wird,

   **dadurch gekennzeichnet, dass**
   die der ersten Trägerfrequenz (3) und der zweiten Trägerfrequenz (4) zugeordnete erste und zweite Trägerphase (3b,4b) und die der dritten Trägerfrequenz (5) zugeordnete dritte Pseudostrecke (5a) kombiniert werden.

2. Positionsbestimmungsverfahren nach Anspruch 1,
   **dadurch gekennzeichnet, dass**
   das Ableiten ein Lösen des folgenden Gleichungssystems aufweist

$$\phi_1 = \rho - \frac{I}{f_1^2} + N_1 \lambda_1 + \varepsilon_{\phi_1}$$

$$\phi_2 = \rho - \frac{I}{f_2^2} + N_2 \lambda_2 + \varepsilon_{\phi_2} \, ,$$

$$R_1 = \rho + \frac{I}{f_1^2} + \varepsilon_{R_1} \, ,$$

$$R_3 = \rho + \frac{I}{f_3^2} + \varepsilon_{R_3} \, ,$$

wobei mit $i = 1,2,3$

$\phi_i$ eine der i-ten Trägerphase (3b,4b,5b,6b) zugeordnete Phasenstrecke,
$R_i$ die i-te Pseudostrecke (3a,4a,5a,6a),
$\rho$ eine geometrische Strecke zwischen Sendeeinheit (2) und Empfangseinheit (1), insbesondere einschliesslich Uhrenfehlern und nichtdispersiven Fehleranteilen,

$$\frac{I}{f_i^2}$$ einen Ionosphäreneinfluss für die i-te Trägerfrequenz (3,4,5,6),

$N_i$ eine Phasenmehrdeutigkeit für die der i-ten Trägerfrequenz (3,4,5,6) zugeordneten Wellenlänge $\lambda_i$,
$\varepsilon_{\phi_i}$ einen Rauschanteil für die der i-ten Trägerfrequenz (3,4,5,6) zugeordnete Phasenstrecke und
$\varepsilon_{R_i}$ einen Rauschanteil für die i-te Pseudostrecke (3a,4a,5a,6a) bezeichnen.

3.  Positionsbestimmungsverfahren nach Anspruch 1,
    **dadurch gekennzeichnet, dass**
    die elektromagnetische Strahlung (S) eine vierte Trägerfrequenz (6) aufweist und

    o die erste und die zweite Trägerphase (3b,4b) und
    o die dritte Pseudostrecke (5a) und die der vierten

Trägerfrequenz zugeordnete vierte Pseudostrecke (6a) kombiniert werden, insbesondere unter Lösen des folgenden Gleichungssystems

$$\phi_1 = \rho - \frac{I}{f_1^2} + N_1 \lambda_1 + \varepsilon_{\phi_1} \text{ ,}$$

$$\phi_2 = \rho - \frac{I}{f_2^2} + N_2 \lambda_2 + \varepsilon_{\phi_2} \text{ ,}$$

$$R_3 = \rho + \frac{I}{f_3^2} + \varepsilon_{R_3} \text{ ,}$$

$$R_4 = \rho + \frac{I}{f_4^2} + \varepsilon_{R_4} \text{ ,}$$

wobei mit $i$ = **1,2** und $j$ = **3,4**

$\phi_i$ eine der i-ten Trägerfrequenz (3,4,) zugeordnete Phasenstrecke,
$R_j$ die j-te Pseudostrecke (5a,6a),
$\rho$ eine geometrische Strecke zwischen Sendeeinheit (2) und Empfangseinheit (1), insbesondere einschliesslich Uhrenfehlern und nichtdispersiven Fehleranteilen,

$$\frac{I}{f_i^2}$$ einen Ionosphäreneinfluss für die i-te Trägerfrequenz (3,4),

$$\frac{I}{f_j^2}$$ einen Ionosphäreneinfluss für die j-te Trägerfrequenz (5,6),

$N_i$ eine Phasenmehrdeutigkeit für die der i-ten Trägerfrequenz (3,4) zugeordnete Wellenlänge $\lambda_i$,

$\varepsilon_{\phi_i}$ einen Rauschanteil für die der i-ten Trägerfrequenz (3,4) zugeordnete Phasenstrecke und

$\varepsilon_{R_j}$ einen Rauschanteil für die j-te Pseudostrecke (5a,6a) bezeichnen.

4. Positionsbestimmungsverfahren nach einem der vorangehenden Ansprüche,
**dadurch gekennzeichnet, dass**
ein Glätten wenigstens einer der dritten oder vierten Pseudostrecken (5a,6a) erfolgt, insbesondere durch Mittelwertbildung für Differenzen aus der dritten und/oder vierten Pseudostrecke (5a,6a) und einer der ersten oder zweiten Trägerphase (3b,4b) zugeordneten Phasenstrecke.

5. Positionsbestimmungsverfahren nach Anspruch 4,
**dadurch gekennzeichnet, dass**
aus den ersten und zweiten Trägerphasen (3b,4b) eine Linearkombination so gebildet wird, dass sich ein positives Vorzeichen für Ionosphärenanteile ergibt.

6. Positionsbestimmungsverfahren nach Anspruch 5,
**dadurch gekennzeichnet, dass**
die Linearkombination $\phi$* gemäss folgender Beziehung erfolgt

$$\phi * = F(\phi_1, \phi_2) = \rho + \frac{I}{f_k^2} + G(N_1, N_2) + \varepsilon_\phi *$$

wobei

$\phi_1$ eine der ersten Trägerfrequenz (3) zugeordnete Phasenstrecke,
$\phi_2$ eine der zweiten Trägerfrequenz (4) zugeordnete Phasenstrecke,
$F(\phi_1, \phi_2)$ eine Linearkombination der Phasenstrecken,
$\rho$ eine geometrische Strecke zwischen Sendeeinheit (2) und Empfangseinheit (1), insbesondere einschliesslich Uhrenfehlern und nichtdispersiven Fehleranteilen,

$\dfrac{I}{f_k^2}$ einen Ionosphäreneinfluss für die zu glättende Trägerfrequenz mit $k \in \{1,2,3,4\}$,

$N_1$ eine Phasenmehrdeutigkeit für die der ersten Trägerfrequenz (3) zugeordnete Wellenlänge $\lambda_1$,
$N_2$ eine Phasenmehrdeutigkeit für die der zweiten Trägerfrequenz (4) zugeordnete Wellenlänge $\lambda_2$,
$G(N_1, N_2)$ eine Linearkombination der Phasenmehrdeutigkeiten und
$\varepsilon_\phi$* einen Rauschanteil für die Linearkombination bezeichnen.

7. Positionsbestimmungsverfahren nach Anspruch 6,
**dadurch gekennzeichnet, dass**
die Linearkombination $\phi$* gemäss

$$\phi* = -\frac{I}{f_k^2} + \lambda_1 N_1 \frac{f_2^2}{f_2^2 - f_1^2} \frac{f_1^2}{f_k^2} - \lambda_2 N_2 \frac{f_2^2}{f_2^2 - f_1^2} \frac{f_1^2}{f_k^2}$$

gebildet wird, wobei
$f_1$ und $f_2$ die erste und zweite Trägerfrequenz (3,4) und $f_k$ die der zu glättenden Pseudostrecke (3a,4a,5a,6a) zugeordnete Trägerfrequenz (3, 4, 5, 6) mit $k \in \{1,2,3,4\}$ bezeichnen.

8. Positionsbestimmungsverfahren nach Anspruch 5 bis 7,
**dadurch gekennzeichnet, dass**
eine Differenzbildung aus Linearkombination und wenigstens einer der dritten oder vierten Pseudostrecken (5a, 6a) erfolgt.

9.  Positionsbestimmungsverfahren nach Anspruch 8,
    **dadurch gekennzeichnet, dass**
    die Differenzbildung gemäss folgender Beziehung erfolgt

$$R_k - \phi^* = -G(N_1, N_2) - \varepsilon_{\phi^*} + \varepsilon_{R_k}$$

$$R_k = \rho + \frac{I}{f_k^2} + \varepsilon_{R_k}$$

wobei mit $k \in \{3,4\}$

$R_k$ die Pseudostrecke (5a,6a) der k-ten Trägerfrequenz (5,6),
$\rho$ eine geometrische Strecke zwischen Sendeeinheit (2) und Empfangseinheit (1), insbesondere einschliesslich Uhrenfehlern und nichtdispersiven Fehleranteilen,

$\dfrac{I}{f_k^2}$ einen Ionosphäreneinfluss für die k-te Trägerfrequenz (5, 6),

$N_1$ eine Phasenmehrdeutigkeit für die der ersten Trägerfrequenz (3) zugeordnete Wellenlänge $\lambda_1$,
$N_2$ eine Phasenmehrdeutigkeit für die der zweiten Trägerfrequenz (4) zugeordnete Wellenlänge $\lambda_2$,
$G(N_1, N_2)$ eine Linearkombination der Phasenmehrdeutigkeiten,

$\varepsilon_{\phi^*}$ $\varepsilon_{\phi^*}$ einen Rauschanteil für die Linearkombination und

$\varepsilon_{R_k}$ einen Rauschanteil für die Pseudostrecke der k-ten Trägerfrequenz (5,6) bezeichnen.

10. Computerprogrammprodukt mit Programmcode, der auf einem maschinenlesbaren Träger gespeichert oder durch eine elektromagnetische Welle verkörpert ist, zur Durchführung des Positionsbestimmungsverfahrens nach einem der Ansprüche 1 bis 9, insbesondere wenn das Programm in einem Computer ausgeführt wird.

Fig. 1

Fig. 2

*Fig.* 3

*Fig.* 4

**Europäisches Patentamt**

## EUROPÄISCHER RECHERCHENBERICHT

Nummer der Anmeldung

EP 05 10 4209

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | VOLLATH U ET AL: "ANALYSIS OF THREE-CARRIER AMBIGUITY RESOLUTION TECHNIQUE FOR PRECISE RELATIVE POSITIONING IN GNSS-2" NAVIGATION, INSTITUTE OF NAVIGATION, WASHINGTON, DC, US, Bd. 46, Nr. 1, 21. März 1999 (1999-03-21), Seiten 13-23, XP008024320 ISSN: 0028-1522 | 1-4,10 | G01S5/14 |
| Y | "INTRODUCTION" "ORIGINAL TCAR RESOLUTION STEPS" "Atmospheric Error Sources" ----- | 5-9 | |
| X | US 2005/080560 A1 (HATCH RONALD R) 14. April 2005 (2005-04-14) * Zusammenfassung * * Absatz [0012] - Absatz [0038] * ----- | 1-4,10 | |
| X | JUNG J ET AL: "OPTIMIZATION OF CASCADE INTEGER RESOLUTION WITH THREE CIVIL GPS FREQUENCIES" PROCEEDINGS OF THE INSTITUTE OF NAVIGATION (ION) GPS, 19. September 2000 (2000-09-19), XP008024327 "DEFINITION OF THE CIR" "INTEGRITY OF THE CIR PROCESS" ----- | 1-4,10 | |

RECHERCHIERTE SACHGEBIETE (Int.Cl.7)

G01S

-/--

Der vorliegende Recherchenbericht wurde für alle Patentansprüche erstellt

| Recherchenort | Abschlußdatum der Recherche | Prüfer |
|---|---|---|
| München | 2. November 2005 | Dollinger, F |

EPO FORM 1503 03.82 (P04C03)

Europäisches
Patentamt

**EUROPÄISCHER RECHERCHENBERICHT**

Nummer der Anmeldung

EP 05 10 4209

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | VOLLATH ULRICH: "The Factorized Multi-Carrier Ambiguity Resolution (FAMCAR) approach for efficient carrier-phase ambiguity estimation" 17TH INTERNATIONAL TECHNICAL MEETING OF THE SATELLITE DIVISION OF THE INSTITUTE OF NAVIGATION, ION GNSS 2004, 21. September 2004 (2004-09-21), Seiten 2499-2508, XP009056324 Long Beach, CA, United States | 5-9 | |
| A | * Zusammenfassung * * Seite 2502 - Seite 2505 * ----- | 1-10 | |
| A | SHAOWEI HAN ET AL: "The Impact of Two Additional Civilian GPS Frequencies on Ambiguity Resolution Strategies" PROCEEDINGS OF THE ION NATIONAL TECHNICAL MEETING, THE INSTITUTE OF NAVIGATION, US, 28. Juni 1999 (1999-06-28), Seiten 315-321, XP002314346 "LINEAR COMBINATION OF CARRIER PHASE MEASUREMENTS" * Seite 318, rechte Spalte * ----- | 1-10 | RECHERCHIERTE SACHGEBIETE (Int.Cl.7) |
| A | HWANG P Y ET AL: "Enhanced Differential GPS Carrier-Smoothed Code Processing Using Dual Frequency Measurements" PROCEEDINGS OF THE INSTITUTE OF NAVIGATION (ION) GPS, XX, XX, 18. September 1998 (1998-09-18), Seiten 461-470, XP002330223 * Seite 461 - Seite 465 * ----- | 5-9 | |
| | -/-- | | |

Der vorliegende Recherchenbericht wurde für alle Patentansprüche erstellt

| Recherchenort | Abschlußdatum der Recherche | Prüfer |
|---|---|---|
| München | 2. November 2005 | Dollinger, F |

**Europäisches Patentamt**

**EUROPÄISCHER RECHERCHENBERICHT**

Nummer der Anmeldung

EP 05 10 4209

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | DAH-JING JWO: "IMPROVED ACCURACY AND DIVERGENCE CORRECTION FOR THE GPS CARRIER-SMOOTHED-CODE PROCESSING" PREVENTION, RODALE PRESS, EMMAUS, PA, US, Bd. 7, Nr. 4, November 2000 (2000-11), Seiten 239-248, XP009055743 ISSN: 0032-8006 * Seite 239 - Seite 241 * * Seite 243 - Seite 245 * ----- | 5-9 | |

RECHERCHIERTE SACHGEBIETE (Int.Cl.7)

Der vorliegende Recherchenbericht wurde für alle Patentansprüche erstellt

| Recherchenort | Abschlußdatum der Recherche | Prüfer |
|---|---|---|
| München | 2. November 2005 | Dollinger, F |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 05 10 4209

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-11-2005

| Im Recherchenbericht angeführtes Patentdokument | Datum der Veröffentlichung | Mitglied(er) der Patentfamilie | Datum der Veröffentlichung |
|---|---|---|---|
| US 2005080560 A1 | 14-04-2005 | WO 2005036202 A1 | 21-04-2005 |

EPO FORM P0461

Für nähere Einzelheiten zu diesem Anhang : siehe Amtsblatt des Europäischen Patentamts, Nr.12/82